# EUROPÄISCHE PATENTANMELDUNG

(11) **EP 1 587 077 A1**
(43) Veröffentlichungstag der Anmeldung: **19.10.2005**
(21) Anmeldenummer: 04008970.8
(22) Anmeldetag: 15.04.2004
(51) Int. Cl.: G11B 7/08

(54) **Gerät zum Lesen und/oder Beschreiben optischer Aufzeichnungsträger**

(71) Anmelder: DEUTSCHE THOMSON-BRANDT GMBH, 78048 Villingen-Schwenningen (DE)
(72) Erfinder: Baas, Reiner, 77790 Steinach (DE); Tabor, Günter, 78056 Villingen-Schwenningen (DE); Dupper, Rolf, 78050 Villingen-Schwenningen (DE)
(74) Vertreter: Thies, Stephan

(57) **Zusammenfassung**

Die vorliegende Erfindung betrifft ein Gerät zum Lesen und/oder Beschreiben optischer Aufzeichnungsträger mit einem aus optischen Elementen (12, 13, 16) gebildeten optischen Pfad (1), einer in einem Linsenhalter (2) angeordneten Fokuslinse (3) und einer Aufhängung (5) für den Linsenhalter (2).

Aufgabe der Erfindung ist es, ein derartiges Gerät weiterzubilden.

Erfindungsgemäß ist dazu vorgesehen, daß die Aufhängung (5) des Linsenhalters (2) unverrückbar an einem Grundkörper (6) angeordnet ist, der eine erste Lagerungsfläche (7) aufweist, an der der optische Pfad (1) mittels einer zweiten Lagerungsfläche (8) anliegt.

## Beschreibung

Die vorliegende Erfindung betrifft ein Gerät zum Lesen und/oder Beschreiben optischer Aufzeichnungsträger wie beispielsweise CD oder DVD. Das Gerät weist einen aus optischen Elementen wie Laserdiode, Strahlteiler, Linsen, Detektoren, etc. gebildeten optischen Pfad auf, eine in einem Linsenhalter angeordnete Fokuslinse und eine bewegliche Aufhängung für den Linsenhalter. Bei einem derartigen Gerät wird die Aufhängung relativ zu einer Grundplatte, die mit dem optischen Pfad fest verbunden ist, verstellbar angeordnet.

Aufgabe der Erfindung ist es, ein derartiges Gerät weiterzubilden.

Erfindungsgemäß ist dazu vorgesehen, daß die Aufhängung des Linsenhalters unverrückbar an einem Grundkörper angeordnet ist, der eine erste Lagerungsfläche aufweist, an der der optische Pfad mittels einer zweiten Lagerunsfläche anliegt. Dies hat den Vorteil, daß jetzt der optische Pfad relativ zum Grundkörper justierbar ist. Da nur der optische Pfad große Präzision erfordert, werden bei dieser Anordnung für Grundkörper und Aufhängung weniger hochwertige Materialien verwendet. Auf diese Weise läßt sich das erfindungsgemäße Gerät kostengünstiger herstellen. Eine separate Montage der Aufhängung sowie eines Tests derselben ist nun nicht mehr erforderlich, was die Herstellung ebenfalls vereinfacht.

Erfindungsgemäß ist vorgesehen, daß die Lagerungsflächen Kugelflächen sind. Dies hat den Vorteil, daß dies die erforderlichen Freiheitsgrade zum Justieren bereitstellt und dennoch eine große Kontaktfläche ermöglicht, die die relative Position der beiden Teile möglichst verwacklungsfrei hält, wenn die Teile zueinander fixiert sind, und die beispielsweise vorteilhaft zum Fixieren mittels eines Klebstoffs verwendet wird. Die Kugelflächen haben dabei vorteilhafterweise den gleichen oder nur geringfügig voneinander abweichende Radien. Gleiche Radien sind meßtechnisch einfach zu handhaben und sind deshalb vorteilhaft. Bei nur geringfügig unterschiedlichen Radien tritt keine flächige Anlage sondern nur eine linienförmige bzw. punktförmige Anlage auf. Auch andere Lagerungsmöglichkeiten wie Dreipunkt-, eine Mischform von Kugel-, Punkt- oder Mehrpunkt-Lagerung sind vorteilhaft möglich. Die einzige Bedingung, die erfüllt sein muß, ist eine drehbare/schwenkbare Lagerung.

Vorteilhafterweise weist der optische Pfad bis auf die Fokuslinse alle optischen Elemente des Abtasters des erfindungsgemäßen Geräts auf. Dies hat den Vorteil, daß nur dieses Bauteil die Verwendung hochpräziser Werkstoffe und eine optisch exakt justierte Montage erfordert. Da die eine exakte Justierung erfordernden Elemente auf kleinem Raum vereint sind, lassen sie sich auch vorteilhafterweise in einem separaten Produktionsschritt mit höherer Qualitätsanforderung herstellen. Anschließend ist lediglich eine exakte Justierung am Grundkörper erforderlich.

Der optische Pfad weist vorteilhafterweise drei Einstellflächen auf, an denen bei der Montage eine Einstellvorrichtung zum Justieren angreift. Die Einstellflächen beziehungsweise die Elemente, deren Oberfläche sie bilden, sind mit dem Grundkörper verbunden, insbesondere verklebt. Dies hat den Vorteil einer einfachen Justierung und ermöglicht gleichzeitig eine Klebeverbindung zum Fixieren des optischen Pfads am Grundkörper.

Der optische Pfad ist vorteilhafterweise in einem Gehäuse angeordnet. Dies bietet sowohl mechanischen Schutz als auch Staubschutz und verhindert, daß Laserlicht austritt beziehungsweise Umgebungslicht einfällt.

Erfindungsgemäß ist vorgesehen, den Grundkörper als ein Stück mit einem oder mehreren der Elemente Magnethalter, Aufhängedrahthalter, Führungsgabel und Führungsbuchse des Geräts auszuführen. Dies hat den Vorteil, daß diese bisher größtenteils separaten Bauteile einstückig ausgeführt sind, deren Montage somit entfällt, und sie bereits von der Herstellung an relativ zueinander korrekt ausgerichtet sind.

Weitere Vorteile der Erfindung sind der nachfolgenden Beschreibung eines Ausführungsbeispiels zu entnehmen. Dabei zeigen
- Fig. 1: optischer Pfad und Linsenhalter gemäß der Erfindung in Schnittdarstellung;
- Fig. 2: optischer Pfad und Grundkörper gemäß der Erfindung in räumlicher Darstellung;
- Fig. 3, Fig. 4: Explosionsdarstellung von optischem Pfad und Grundkörper.

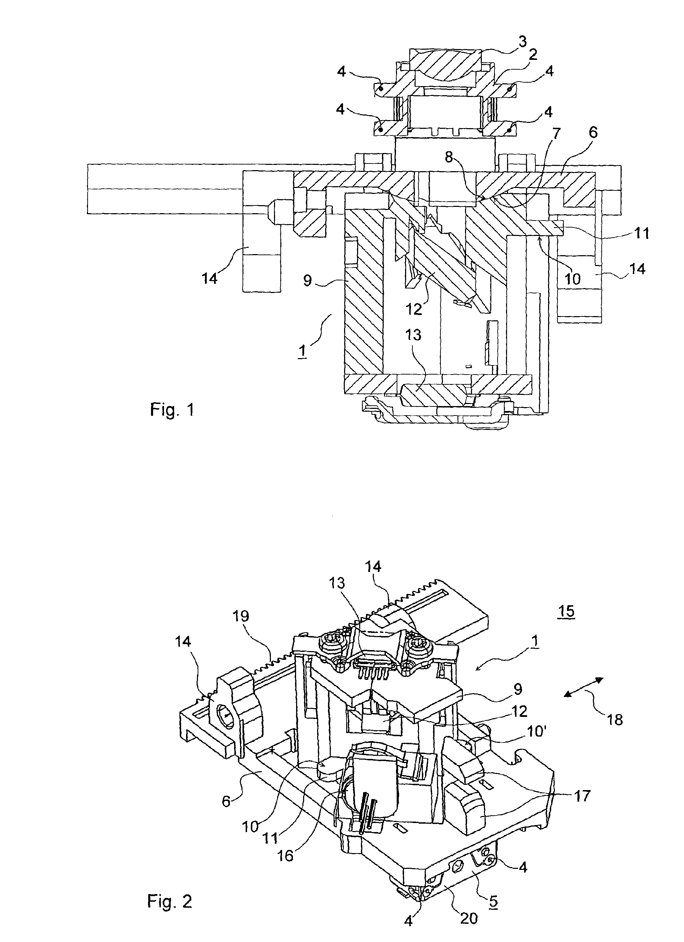

Fig. 1 zeigt den optischen Pfad 1 und den Linsenhalter 2 eines erfindungsgemäßen Geräts in Schnittdarstellung. Am Linsenhalter 2 ist eine Fokuslinse 3 angeordnet. Der Linsenhalter 2 ist durch vier Aufhängedrähte 4 mit der hier nicht sichtbaren Aufhängung 5 verbunden. Diese ist mit dem Grundkörper 6 unverrückbar verbunden. Der Grundkörper 6 weist eine kugelförmige Lagerfläche 7, die mit einer ebenfalls kugelförmigen Lagerfläche 8 eines Gehäuses 9 des optischen Pfads zusammenwirkt. Man sieht ebenfalls eine der Einstellflächen 10, die an Einstellaschen 11 angeordnet sind, welche ihrerseits mittels Kleben mit dem Grundkörper 6 während der Montage verbindbar sind. Als weitere optische Elemente sind in dieser Schnittdarstellung ein halbdurchlässiger Spiegel 12 und ein Photodetektor 13 erkennbar. Die Lagerflächen 7, 8 ermöglichen es, den optischen Pfad 1 relativ zum Grundkörper 6 und damit relativ zur mit diesem unverrückbar verbundenen Fokuslinse 3 zu justieren. Am Grundkörper 6 sind weiterhin Führungsbuchsen 14 und andere, in dieser Darstellung nicht beschriebene Elemente, einstückig ausgeführt.

Fig. 2 zeigt den optischen Pfad 1 und den Grundkörper 6 eines erfindungsgemäßen Geräts in räumlicher Darstellung. Dabei sind diese den optischen Abtaster 15 des Geräts bildenden Elemente so dargestellt, daß ein hier nicht dargestellter optischer Aufzeichnungsträger unterhalb des optischen Abtasters 15 in der Abbildung darzustellen wäre. Am Gehäuse 9 erkennt man den Photodetektor 13 sowie die Laserdiode 16 und eine der Einstellaschen 11 mit Einstellfläche 10. Zwei weitere Einstellaschen sind hier nicht oder nur teilweise erkennbar, lediglich eine weitere Einstellfläche 10' ist unverdeckt. Auch die Position des halbdurchlässigen Spiegels 12 an der alternativ ein polarisierender oder nichtpolarisierender Strahlteiler angeordnet sein kann, ist sichtbar. Am Grundkörper 6 sind die Führungsbuchsen 14 sowie eine Führungsgabel 17 erkennbar. Die Führungsbuchsen 14 laufen entlang eines hier nicht dargestellten Führungsstabes, während die Führungsgabel 17 ein weiteres geeignetes Führungselement, z. B. einen Führungsstab oder eine Führungsplatte, umgreift. Der optische Abtaster 15 ist somit in Richtung des Doppelpfeils 18 beweglich angeordnet. Zum Antrieb dient eine Zahnstange 19, die hier ebenfalls einstückig mit dem Grundkörper 6 ausgeführt ist. Ganz unten erkennt man noch die unterhalb des Grundkörpers 6 befindliche Aufhängung 5. Von dem Aufhängedrahthalter 20, in dem Aufhängedrähte 4 befestigt sind, ist ebenfalls nur ein Teil zu sehen.

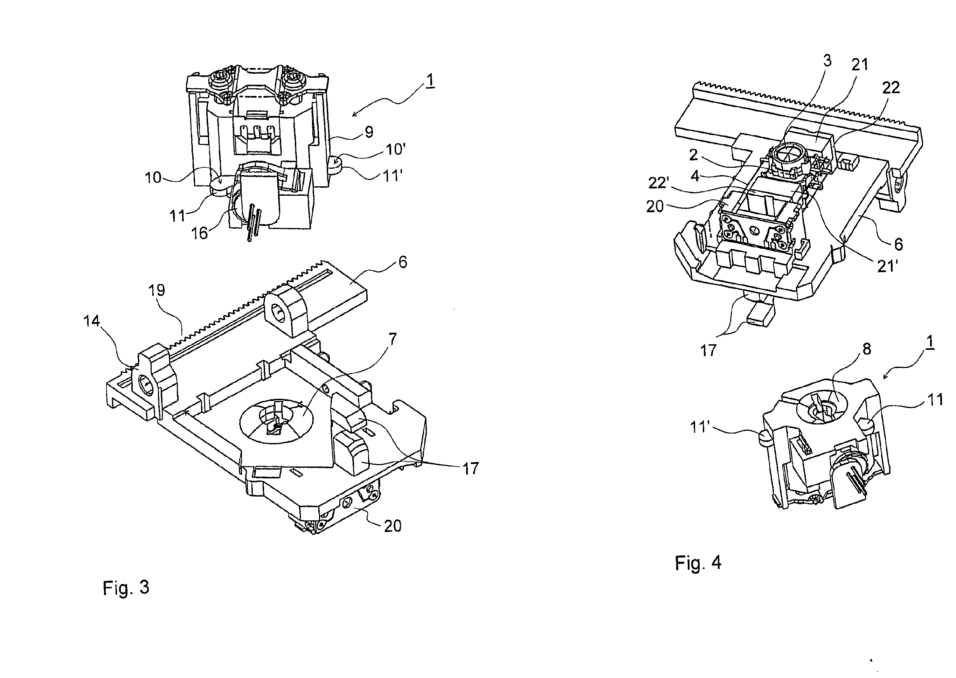

Fig. 3 zeigt eine Explosionsdarstellung von optischem Pfad 1 und Grundkörper 6 in der gleichen Ansicht wie in Fig. 2.

Gleiche Teile sind mit gleichen Bezugszeichen versehen und nur soweit erforderlich erläutert. Am Gehäuse 9 erkennt man nun zwei Einstellaschen 11, 11' mit zugehörigen Einstellflächen 10, 10'. Am Grundkörper 6 ist die erste Lagerfläche 7 sichtbar. Man erkennt ihre kugelförmige Krümmung und eine mittige Öffnung durch die der vom optischen Pfad her kommende Abtaststrahl zur hier nicht sichtbaren Fokuslinse 3 gelangt.

Fig. 4 zeigt die gleiche Explosionsdarstellung wie Fig. 3, aber aus der entgegengesetzten Richtung. Am Grundkörper 6 sieht man nun deutlich den Aufhängedrahthalter 20 sowie die im Linsenhalter 2 angeordnete Fokuslinse 3. Der Linsenhalter 2 ist mittels Aufhängedrähten 4 mit dem Aufhängedrahthalter 20 verbunden. Diese bilden die Aufhängung des Linsenhalters 2. Beidseitig des Linsenhalters 2 sind Magnete 21, 21' angeordnet, die von Magnethaltern 22, 22' gehalten werden. Letztere sind einstückig mit dem Grundkörper 6 verbunden. Am optischen Pfad 1 ist die zweite Lagerfläche 8 als hohlkugelförmige Ausnehmung erkennbar.

Bei herkömmlichen optischen Laufwerken wird üblicherweise die Fokuslinse 3 nach dem optischen Pfad 1 ausgerichtet. Die Fokuslinse 3 ist Bestandteil des Aktuators, der unter anderem aus den Magneten 21, 21', den Magnethaltern 22, 22' dem Linsenhalter 2, den Aufhängedrähten 4 und der Aufhängung 5 besteht. Somit geschieht dieses Ausrichten durch Schwenken des Aktuators. Durch diesen Lösungsansatz gibt es aber kaum noch Möglichkeiten durch weglassen von Bauteilen eine Kostenersparnis zu erreichen. Da der optische Pfad herkömmlicherweise auch die Führungsbuchsen 14 enthält, muß auch immer der Aktuator eingestellt werden. Zudem muß der optische Pfad, der herkömmlicherweise mit dem Grundkörper 6 unverrückbar zusammenhängt in einem hochwertigen Material gefertigt werden, obwohl nur bestimmte Stellen diese Präzision benötigen.

Durch eine sinnvolle Verkleinerung des optischen Pfads 1 auf die nur wirklich notwendige Größe ermöglicht es die Erfindung den optischen Pfad 1 zur Fokuslinse 3 zu schwenken. Der restliche Teil wird in einem billigeren Material gefertigt, Bauteile wie z.B. der Aufhängedrahthalter 20 können integriert werden, andere sogar entfallen wie z.B. eine Aktuatorplatte.
Somit wird erfindungsgemäß eine kostengünstige Lösung erzielt.

In anderen Worten ist die Idee dieser Erfindung, die Einstellung der Fokuslinse 3 zum optischen Pfad 1 zu ersetzen durch eine Einstellung des optischen Pfades 1 relativ zur Fokuslinse 3. Der optische Pfad 1 ist in einem kleineren separaten Gehäuse 9 untergebracht, welches z.B. aus Zinkdruckguß oder einem hochwertigen Kunststoff ausgeführt ist, um so die notwendige Präzision zu erreichen. Der restliche Teil, einschließlich der Führungsbuchsen 14, wird dann aus einem kostengünstigeren Material gefertig. Bauteile wie der Magnethalter 22 sowie der Aufhängedrahthalter werden integriert.

Da der optische Pfad 1 getrennt in einem kleineren separten Gehäuse 9 untergebracht ist, ist auch ein modularer Aufbau ermöglicht.

Die Erfindung stellt eine kostengünstige Lösung dar. Man verwendet teures Material nur an jenen Stellen wo es auch notwendig ist. Die Funktion von mehreren Teilen wird in dem aus kostengünstigerem Material hergestellten Grundkörper 6 mit intergriert.

## Patentansprüche

1. Gerät zum Lesen und/oder Beschreiben optischer Aufzeichnungsträger mit einem aus optischen Elementen (12, 13, 16) gebildeten optischen Pfad (1), einer in einem Linsenhalter (2) angeordneten Fokuslinse (3) und einer Aufhängung (5) für den Linsenhalter (2), **dadurch gekennzeichnet, daß** die Aufhängung (5) des Linsenhalters (2) unverrückbar an einem Grundkörper (6) angeordnet ist, der eine erste Lagerungsfläche (7) aufweist, an der der optische Pfad (1) mittels einer zweiten Lagerungsfläche (8) anliegt.

2. Gerät nach Anspruch 1, **dadurch gekennzeichnet, daß** die Lagerungsflächen (7, 8) Kugelflächen sind.

3. Gerät nach einem der vorhergehenden Ansprüche, **dadurch gekennzeichnet, daß** der optische Pfad (1) bis auf die Fokuslinse (3) alle optischen Elemente (12, 13, 16) des Abtasters (15) des Geräts enthält.

4. Gerät nach einem der vorhergehenden Ansprüche, **dadurch gekennzeichnet, daß** der optische Pfad (1) Einstellflächen (11, 11') aufweist, die mit dem Grundkörper (6) verbunden sind.

5. Gerät nach einem der vorhergehenden Ansprüche, **dadurch gekennzeichnet, daß** der optische Pfad (1) in einem Gehäuse (9) angeordnet ist.

6. Gerät nach einem der vorhergehenden Ansprüche, **dadurch gekennzeichnet, daß** der Grundkörper (6) einstückig mit einem oder mehreren der Elemente Magnethalter (22, 22'), Aufhängedrahthalter (20), Führungsgabel (17), und Führungsbuchse (14) des Geräts ausgeführt ist.
